# EUROPEAN PATENT SPECIFICATION

(11) **EP 1 860 892 B1**
(45) Date of publication and mention of the grant of the patent: **13.10.2010**
(21) Application number: 06775409.3
(22) Date of filing: 17.08.2006
(51) Int. Cl.: H04W 4/14

(54) **Methods and system for receiving and sending a short message by a group calling user**
Verfahren und System zum Empfangen und Senden einer Kurznachricht durch eine Gruppe rufenden Teilnehmer
Procédés et système pour recevoir et transmettre un message court par un utilisateur d'appel de groupe

(30) Priority: 30.09.2005 CN 200510107408
(43) Date of publication of application: 28.11.2007
(73) Proprietor: Huawei Technologies Co., Ltd., Longgang District, Shenzhen Guangdong 518129 (CN)
(72) Inventor: CHEN, De, Guangdong Province (CN); LIU, Guang, Guangdong Province (CN); ZHENG, Yali, Guangdong Province (CN)
(74) Representative: Reinhard - Skuhra - Weise & Partner GbR
(86) International application number: PCT/CN2006/002091
(87) International publication number: WO 2007/036125

(56) References cited:
- EP-A- 1 199 902
- WO-A-02/093945
- WO-A2-2004/099919
- CN-A- 1 602 090
- US-A- 5 655 215

## Description

### Field of the Invention

The present invention is related to the field of communications, and more particularly, to a method and system for receiving a short message, and a method for sending a short message, also to a Mobile Switching Center (MSC), and a Mobile Station (MS).

### Background of the Invention

As a rather economical and flexible dispatching communication system recently developed, the trunk wireless communication system, hereinafter referred to as the trunking system, is widely used in government agencies, energy source and transportation units, airports and docks, industrial and mining enterprises, fire and police stations, water conservancy and military units to meet the demands of various units for intercommunication.

In the existing trunking system, each group includes information of group identity ID and a group call area defined as a cluster of cells. The information, however, is fixed information stored in a Home Location Register (HLR) and a Subscriber Identity Module (SIM) card when a subscriber opens an account, which does not enable mobility management of group call service subscribers.

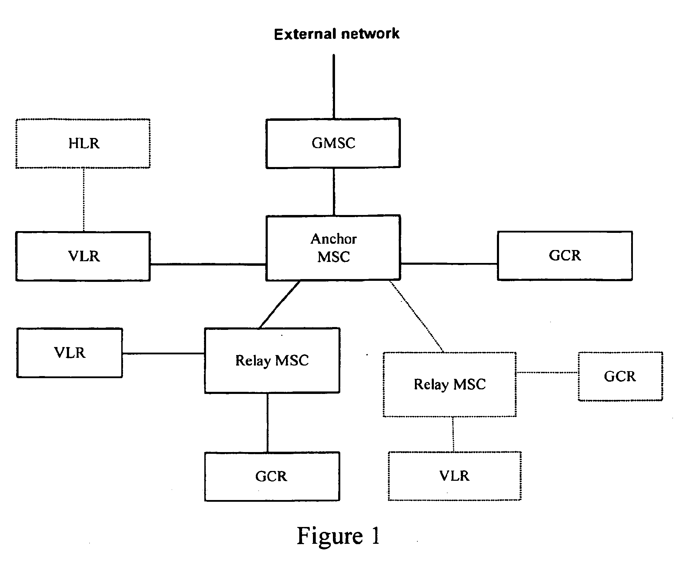

Figure 1 illustrates a core network structure of a trunking system.

As shown in Figure 1, an HLR stores information of a subscriber, including International Mobile Subscriber Identity (IMSI) of the subscriber and an ID list of groups which the subscriber belongs to (a subscriber can belong to 50 groups at most).

A Gateway Mobile Switching Center (GMSC) is connected with the external network and also connected with an anchor Mobile Switching Center (MSC).

The anchor MSC is responsible for managing and maintaining a specific Voice Group Call Service (VGCS).

All MSCs, except the anchor MSC, are Relay MSCs when the group call area exceeds one MSC area and the relation between the anchor MSC and the relay MSCs is one-to-multiple in tree shape.

A Visitor Location Register (VLR) stores the IMSI of a subscriber and an ID list of a group the service subscriber belongs to, which are copied from the HLR when the service subscriber roams.

A Group Call Register (GCR) includes a group ID and a group call area which are combined as a group call reference, the GCR connected with the anchor MSC contains a list of identities of dispatchers, a list of relay MSCs, and a list of cells managed directly by the Anchor MSC related to the group call reference, and the GCR connected with the relay MSC contains an anchor MSC address related to the group call reference, and a list of cells managed by the relay MSC.

Upon receiving a group call initiating request, the anchor MSC inquires about the group attributes from the connected GCR to get the list of identities of dispatchers, the list of relay MSCs, and the list of cells under the control of the anchor MSC; then the anchor MSC calls the dispatchers the relay MSCs, and establishes group call channels in the cells under the control of anchor MSC, notifies the service subscribers in the group about the initiated group call over the Notification Channel (NCH) of each cell and indicates the group channel for group members to listen on.

Upon receiving the group call request from the anchor MSC, the relay MSC searches the list of cells from the connected GCR, establishes group call channels in these cells, and notifies, on the NCH, service subscribers in the group that a group call is initiated, and indicates the group channels for group members to listen on.

When a group call is initiated, a group of subscribers in a specific area can simultaneously join the group call and listen to a talker. Only one talker is allowed at the same time. After the talker terminates talking, any other subscriber can become a talker by pressing a Push to Talk (PTT) button. During the ongoing call, any subscriber can decide by himself to leave or join the group call before the call is over, and the subscriber entering the group call area can receive a notification and join the group call in the midway.

A talker can occupy the uplink group call channel while listening on the group call downlink channel; the network can also assign the talker an uplink/downlink dedicated channel. However, listeners can only listen on the group call downlink channel.

Short message service transfers text information with No.7 signaling network as its bearer. The contents of a short message are limited within about 70 words, i.e. 140 bytes. A short message is mainly sent and received by mobile terminals peer to peer, and between a mobile terminal and a communication network.

A mobile network generally includes voice channels and control channels. Although it is a value added service provided by the GSM digital cellular mobile communication system like voice transmission and fax, short message service occupies no voice channels, not only ensuring the speediness of delivery but greatly reducing the cost for communication.

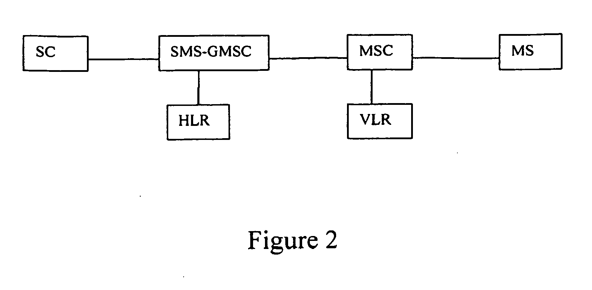

Figure 2 is a block diagram illustrating the structure of a trunking system for delivering short messages in the prior art. A short message is delivered via a wireless control channel, stored and forwarded by a Service Centre used for Short Message Service (SC), and the contents of each message are limited within 140 bytes. The plain text information from the sender is stored in the Service Centre used for Short Message Service (SC), and then forwarded to the destination user terminals, which means that even if the receiver can not receive information instantly due to mobile offline or other reasons, the system may save and resend the information later at an appropriate time. This delivering mode is no doubt technically more superior to the wireless pager without remarkable improvement in function.

When a subscriber in a group call receives a short message, the present policy is as follows:

First, the short message including an MSISDN of the destination subscriber is sent to an SC, the SC sends the short message to the MSC where the subscriber is located, and the MSC pages the subscriber on a Paging Channel (PCH).

Second, since the subscriber is in a group call service, in the group call mode 1.0, the listeners in a group only listen on the group call downlink channel; the talker in a group call not only listens on the group call downlink channel (the terminal will mute the downlink channel to avoid hearing its own echo), but also occupies the group call uplink channel to talk thereon. In the group call mode 1.5, the listener in a group call only listens on the group call downlink channel; the talker in a group call not only listens on the group call downlink channel (the terminal will mute the downlink channel to avoid hearing its own echo), but also occupies a dedicated uplink channel to talk thereon. Therefore, the subscriber in a group call does not listen on PCH and can not receive the paging message. As a result, the network cannot succeed in paging the subscriber.

Third, the MSC center thinks that the subscriber cannot be reached as it receives no response from the subscriber, and thus sends to the SC an error report that the subscriber can not be reached.

Fourth, the SC reports to the HLR on the error of this short message, and the HLR records that the delivery failure of the short message to the subscriber is caused by the fact that the subscriber cannot be reached.

Fifth, within the lifecycle of this short message, the SC periodically sends a paging message to this subscriber until the subscriber leaves the group call and is able to receive the paging message on the PCH. Or, this subscriber initiates location update again, and the SC will be triggered to send the short message to the subscriber again because there is a record in the HLR indicates that a short message is received by the subscriber.

In the prior art mentioned above, the network may also deliver an SMS paging message on a group call Fast Associated Control Channel (FACCH). However, a subscriber cannot differentiate ordinary call paging from short message service, thus cannot make a response. Receive no response from the subscriber, the network still deems the subscriber as unreachable and thus the handling method is the same as that of paging a subscriber in a group call on the PCH.

In a US patent, US 5655215, it recites a method for transmitting messages using an efficient communications link protocol over an air interface of a cellular communications system. According to the method, a frame in the protocol is divided into a plurality of sections including a header section and a data section; the header section contains a field which indicates what type of information is contained in the frame.

It can be seen from the prior art that either in the prior art of paging the subscriber on a PCH or an FACCH, a subscriber in a group call cannot receive a short message from the network, and the subscriber has to leave a group call or initiates location update in order to receive a end-to-end short message.

### Summary of the Invention

The embodiments of the present invention provide a method and system for receiving a short message, and a method for sending a short message, so as to solve the problem that a subscriber in a group call cannot receive a short message from the network in time.

According to an embodiment of the present invention, a method for receiving a short message includes: receiving, by a group call service subscriber in a group call, a paging message including a short message indication indicating that a short message is to be received, wherein the paging message is sent by a Mobile Switching Centre, MSC over a Fast Associated Control Channel, FACCH; and receiving the short message according to the short message indication in the paging message.

Preferably, the method further includes: leaving a group call in response to receiving the paging message including the short message indication; where the group call service subscriber receives the short message according to the short message indication in response to leaving the group call.

Preferably, the process of leaving a group call includes:
leaving the group call actively; or leaving the group call when the group call is terminated.

Preferably, the method further includes:
sending a channel request over a random channel; and
sending a paging response of the short message over the Standalone Dedicated Control Channel, SDCCH; where the SDCCH is assigned to the group call service subscriber according to the channel request; and the group call service subscriber receives the short message over the SDCCH.

Preferably, if the group call service subscriber actively leaves the group call, the method further includes: rejoining the group call if the group call keeps ongoing after the group call service subscriber receives the short message.

Preferably, the process of receiving the short message includes: receiving the short message at the time of UPLINK FREE in the group call.

Preferably, the process of receiving the short message at the time of UPLINK FREE in the group call includes: sending, by the group call service subscriber, a paging response over a Fast Associated Control Channel, FACCH, of a group call uplink channel; and receiving the short message sent by the MSC over a Slow Associated Control Channel, SACCH, of a group call downlink channel.

Preferably, the process of receiving the short message at the time of UPLINK FREE in the group call includes: sending, by the group call service subscriber, a paging response over a group call uplink channel; and receiving the short message sent by the MSC over a Standalone Dedicated Control Channel, SDCCH.

Preferably, the process of sending a paging response over a group call uplink channel includes: initiating an uplink access and sending a layer 3 message indicating that the uplink access is for the paging response.

Preferably, the short message indication is 4 bits added into a NOTIFICATION message on FACCH indicating that the paging message is for a short message service.

According to an embodiment of the present invention, a method for sending a short message includes: receiving, by a Mobile Switching Centre, MSC, a short message; sending to a group call service subscriber in a group call a paging message including a short message indication indicating that a short message is to be received over a Fast Associated Control Channel, FACCH; and sending the short message to the group call service subscriber after the group call service subscriber receives the short message indication:

Preferably, the process of sending the short message includes: sending the short message at the time of UPLINK FREE in a group call.

According to an embodiment of the present invention, a system for transmitting a short message includes:
a Mobile Switching Center, MSC, for sending a paging message including a short message indication in response to receiving a short message, wherein the short message indication indicates that a short message is to be received over a Fast Associated Control Channel, FACCH; and a Mobile Station, MS, being in a group call for receiving the paging message, and receiving the short message according to the short message indication in the paging message.

Preferably, the MSC includes a paging message transmission unit, for sending the paging message over a Fast Associated Control Channel, FACCH; and a short message indication unit, for adding the short message indication into the paging message.

Preferably, the MS includes:
an identification unit of short message indication, for receiving the paging message and identifying the short message indication; and
a short message reception unit, for receiving the short message in response to sending the paging response.

A Mobile Switching Center, MSC, includes:
a short message indication unit, for adding a short message indication into the paging message, where the paging message is sent by a Mobile Switching Centre, MSC, and the short message indication indicates that a short message is to be received; and a paging message transmission unit, for sending a paging message to a group call service subscriber.

A Mobile Station, MS, the MS being in a group call and includes: an identification unit of short message indication, for receiving a paging message including a short message indication and identifying the short message indication, wherein the paging message is sent by a Mobile Switching Centre, MSC over a Fast Associated Control Channel, FACCH, and the short message indication indicates that a short message is to be received; and a short message reception unit, for receiving the short message in response to sending the paging response.

Preferably, the MS further includes:
a channel request transmission unit, for initiating a channel request over a random channel after a group call service subscriber actively leaves a group call; and a paging response transmission unit, for sending a paging response of the short message according to the short message indication identified by the identification unit of short message indication..

Preferably, the MS further includes:
a group call state determination unit, for determining a state of the group call in response to receiving the short message when the group call service subscriber actively leaves the group call; and rejoining the group call if the group call keeps ongoing.

By adopting the technical solution according to the present invention, a subscriber in a group call may receive a short message in time and enjoy a short message service while enjoying a group call service.

### Brief Description of the Drawings

Figure 1 is a block diagram illustrating the structure of the core network in a trunking system in the prior art.
Figure 2 is a block diagram illustrating the structure of a trunking system for delivering short messages in the prior art.
Figure 3 is a schematic flowchart of a method for a group call subscriber to receive a short message in accordance with an embodiment of the present invention;
Figure 4 is a schematic flowchart, in accordance with an embodiment of the present invention, illustrating receiving, by a subscriber, a short message after the subscriber leaves a group call;
Figure 5 is a first schematic flowchart, in accordance with an embodiment of the present invention, illustrating receiving a short message when the group call uplink is free.
Figure 6 is a second schematic flowchart, in accordance with another embodiment of the present invention, illustrating receiving a short message when the group call uplink is free.
Figure 7 is a block diagram illustrating the structure of the system in accordance with an embodiment of the present invention.

### Detailed Description of the Invention

A detailed description is hereinafter given to specific embodiments of the present invention with reference to the accompanying drawings.

In accordance with an embodiment of the invention, to solve the problem that a subscriber in a group call cannot receive a short message, a short message paging message is sent over the FACCH in a group call, and a "short message indication" is added so that a subscriber can identify the reception of the short message paging and thus is capable of receiving the short message while using the group call services. Therefore, a more timely and effective short message communication is implemented. The short message indication may be 4 bits added into the NOTIFICATION message on FACCH to indicate that this paging message is for the short message service.

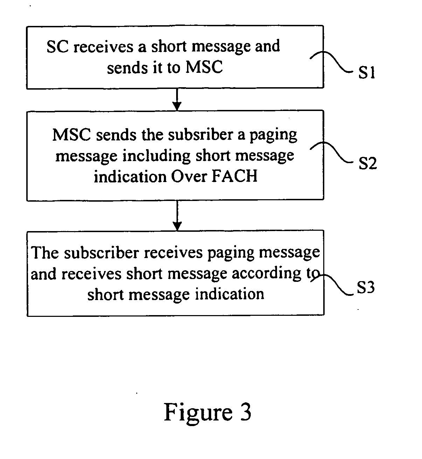

Figure 3 is a schematic flowchart illustrating the main process of the method for a group call service subscriber to receive a short message in accordance with an embodiment of the present invention. As shown in Figure 3:

In Block S1: an SC receives a short message and sends it to an MSC to which the subscriber belongs.

Specifically, an edited short message is sent to the SC, the short message may include the MSISDN of the destination subscriber, and the SC sends the short message to the MSC where the subscriber is located.

In Block S2, the MSC sends to the subscriber a paging message over the FACCH, and the paging message may include a short message indication.

The MSC pages the subscriber over the FACCH. The subscriber is in a group call service, and in the group call mode 1.0, the listener in a group call only listens on the group call downlink channel; the talker in a group call not only listens on the group call downlink channel (the noise will be muted in the downlink direction by the terminal to prevent its own echo from being heard), but also occupies the group call uplink channel to talk thereon; in the group call mode1.5, the listener in a group call only listens on the group call downlink channel; the talker in a group call not only listens on the group call downlink channel (the noise will be muted in the downlink direction by the terminal to prevent its own echo from being heard), but also occupies a dedicated uplink channel to talk thereon. Therefore, in both mode 1.0 and mode 1.5, the subscriber in a group call does not listen on the PCH, but can receive its own paging message over the FACCH in the group call downlink direction. This paging message includes a short message indication, which indicates that this paging message is short message paging.

The method as above described, sending a paging message with short message indication over the FACCH is used for the subscriber to receive the short message when the user is in the group call. And in the conventional process, the subscriber receives the short message over the PCH when the subscriber is not in the group call. Thus, in consideration of the fact that the subscriber in a group call cannot receive the paging message sent over the PCH, the solution of paging the subscriber over the FACCH and that over the PCH can work better in co-operation with each other.

In Block S3, the subscriber receives the paging message, and receives the short message according to the short message indication.

Upon receiving this paging, the subscriber identifies, according to the short message indication, that the paging is short message paging and that a short message is to be received, and the subscriber receives the short message according to the short message indication.

The subscriber may receive the short message in several manners.

For example, in one manner, the subscriber leaves the group call and then receives the short message. The subscriber may actively leave the group call in proper time and receive the short message, or the subscriber may receive the short message after this group call is over. When subscriber actively leaves the group call or this group call is over, the terminal may initiate a channel request over a Random Access Channel (RACH) since the short message paging is recorded on the subscriber terminal. The subscriber sends a paging response of the short message on a Standalone Dedicated Control Channel (SDCCH) which is assigned by the network to the subscriber. Then, the subscriber will receive the short message over the SDCCH according to a standard short message point-to-point procedure. If the subscriber actively leaves this group call, in response to receiving the short message, the subscriber may also determine whether this group call is terminated, and may rejoin this group call over the NCH if the call group of the group call service where the subscriber belongs to is not yet terminated.

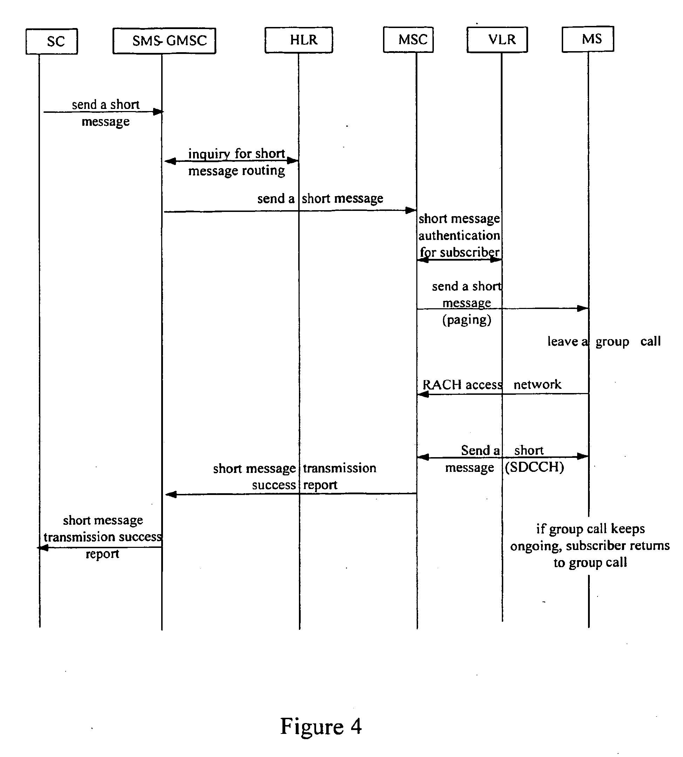

Figure 4 is a schematic flowchart illustrating the manner described in the above example. As shown in Figure 4, in response to actively leaving the group call, the subscriber initiates a channel request over the RACH, sends a paging response of the short message over the SDCCH which is assigned by the network to the subscriber, and receives the short message over the SDCCH according to a standard short message point-to-point procedure. In response to receiving such a short message, if the call group of the group call service where the subscriber belongs to still exists, the subscriber return this group call over the NCH.

For example, in another manner, if the uplink is free (UPLINK FREE) in a group call, a subscriber terminal initiates an uplink access, but informs the network by layer 3 message interaction that a short message can be received. The network will assign this subscriber to receive the short message over the SDCCH, and the short message is received over the SDCCH according to a standard short message point-to-point procedure. After the short message has been received, the network assigns the subscriber terminal back to the group channel.

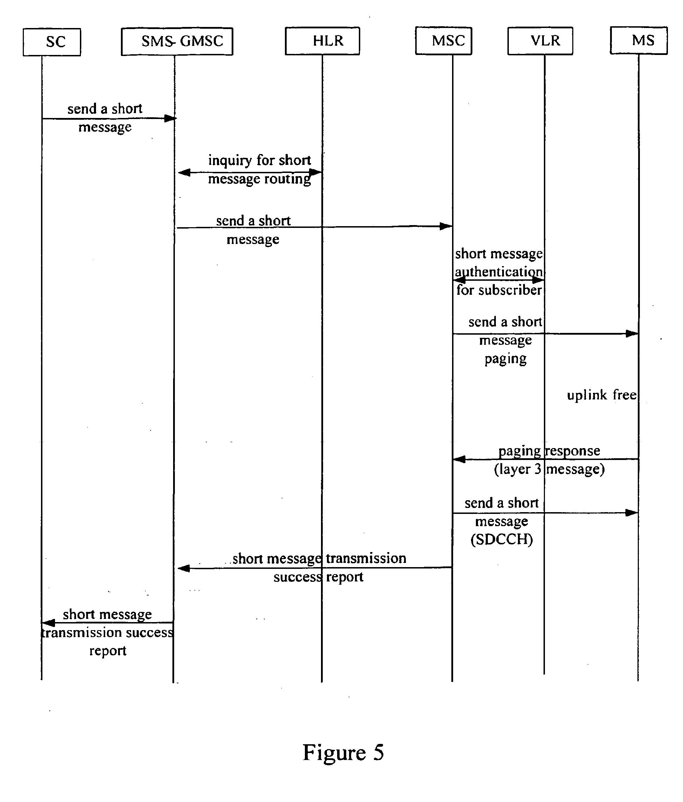

Figure 5 is a schematic flowchart illustrating the above example. As can be seen from Figure 5, if the uplink is free (UPLINK FREE) in a group call, the subscriber terminal initiates an uplink access, but the layer 3 message indicates that the access is for a short message service response. The network dispatches this subscriber to receive the short message over the SDCCH, and the short message is received over the SDCCH according to a standard short message point-to-point procedure.

For example, in yet another manner, a subscriber can make a reception in the case of UPLINK FREE in a group call. In this case, there is no talker in the group call for the time being. The subscriber receiving a short message paging message may occupy the FACCH of the group call uplink channel to respond to the short message paging. The SC will send a short message to the MSC where the subscriber belongs to. The MSC sends this short message to the subscriber over the group call downlink Slow Associated Control Channel (SACCH).

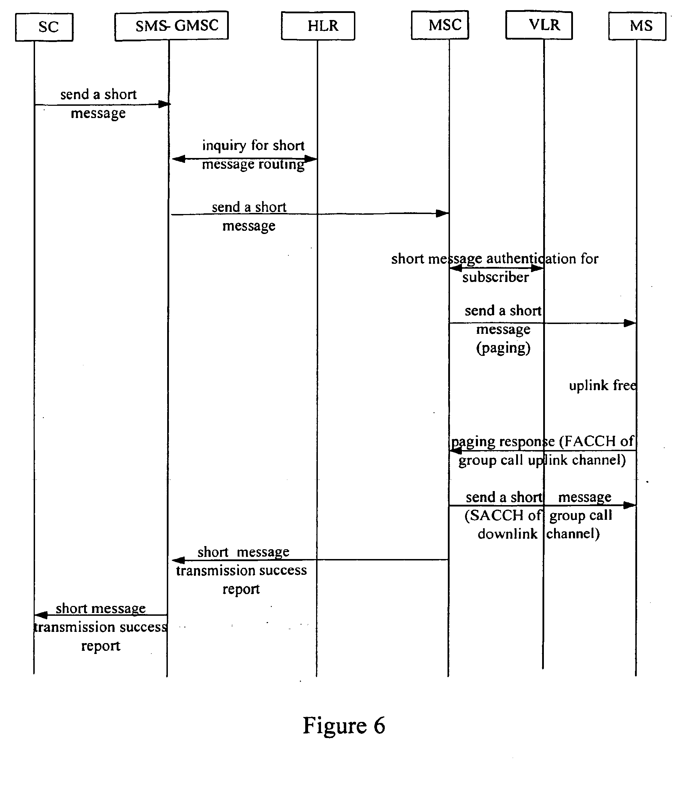

Figure 6 is a schematic flowchart illustrating the above example. As can be seen from Figure 6, if the uplink is free (UPLINK FREE), the subscriber sends a paging response to the MSC over the FACCH of the group call uplink channel and the MSC sends the short message to the subscriber over the SACCH of the group call downlink channel.

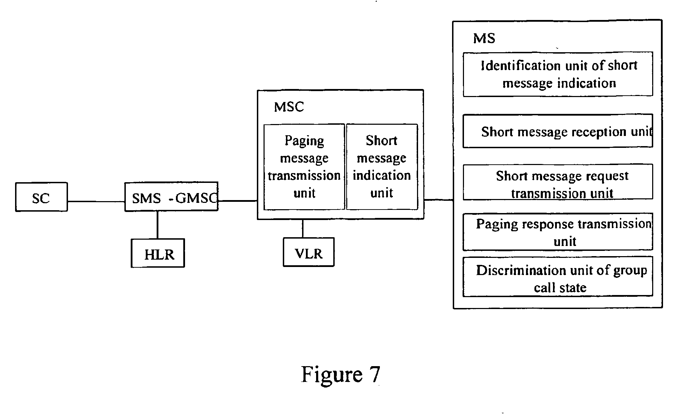

Figure 7 is a block diagram illustrating the structure of a system for a group call subscriber to receive a short message in accordance with an embodiment of the present invention. As shown in Figure 7, the system mainly includes: an SC, a Short Message Service-Gateway Mobile Switching Centre (SMS-GMSC), a MSC and a Mobile Station (MS). The SC receives the short message sent from the MS, and forwards it to the short message gateway. The short message gateway forwards the short message to the MSC, and the MSC sends the short message to the destination address.

According to an embodiment of the present invention, the MSC includes:
a paging message transmission unit, for sending a paging message to the subscriber; and
a short message indication unit, for adding a short message indication into the paging message.

According to an embodiment of the present invention, the MS includes:
an identification unit of short message indication, for receiving the paging message and identifying the short message indication; and
a short message reception unit, for receiving the short message according to the short message indication.

According to the present invention, the MS further includes:
a channel request transmission unit, for initiating a channel request over a random channel after a subscriber actively leaves a group call; and
a paging response transmission unit for sending a paging response of the short message according to the short message indication from the identification unit of short message indication.

The MS may further include a group call state determination unit, for determining a state of the group call in response to receiving the short message after the subscriber actively leaves the group call. If the group call is not yet terminated, the subscriber rejoins the group call.

With the aforesaid technique, a subscriber in a group call can receive a short message in time. And a subscriber can also enjoy a short message service while enjoying a group call service.

Obviously, those skilled in the art may make numerous changes and variations on the solution of this invention without departing from the scope thereof. Accordingly, it is intended that this invention includes the changes and variations in case that such changes and variations come within the scope as set forth in the appended claims and the equivalent techniques thereof.

## Claims

1. A method for receiving a short message, **characterized by** comprising:
receiving (S3), by a group call service subscriber in a group call, a paging message including a short message indication indicating that a short message is to be received, wherein the paging message is sent by a Mobile Switching Centre, MSC over a Fast Associated Control Channel, FACCH; and
receiving (S3) the short message according to the short message indication in the paging message.

2. The method of claim 1, further comprising:
leaving a group call in response to receiving the paging message including the short message indication; wherein the group call service subscriber receives the short message according to the short message indication in response to leaving the group call.

3. The method of claim 2, wherein the process of leaving a group call comprises:
leaving the group call actively; or
leaving the group call when the group call is terminated.

4. The method of claim 2, further comprising:
sending a channel request over a random channel; and
sending a paging response of the short message over a Standalone Dedicated Control Channel, SDCCH; wherein the SDCCH is assigned to the group call service subscriber according to the channel request; and
the group call service subscriber receives the short message over the SDCCH.

5. The method of claim 3 or 4, further comprising:
if the group call service subscriber actively leaves the group call, rejoining the group call if the group call keeps ongoing after the group call service subscriber receives the short message.

6. The method of claim 1, wherein the process of receiving the short message comprises:
receiving the short message at the time of UPLINK FREE in the group call.

7. The method of claim 6, wherein the process of receiving the short message at the time of UPLINK FREE in the group call comprises:
sending, by the group call service subscriber, a paging response over a Fast Associated Control Channel, FACCH, of a group call uplink channel; and
receiving the short message sent by the MSC over a Slow Associated Control Channel, SACCH, of a group call downlink channel.

8. The method of claim 6, wherein the process of receiving the short message at the time of UPLINK FREE in the group call comprises:
sending, by the group call service subscriber, a paging response over a group call uplink channel; and
receiving the short message sent by the MSC over a Standalone Dedicated Control Channel, SDCCH.

9. The method of claim 8, wherein the process of sending a paging response over a group call uplink channel comprises:
initiating an uplink access and sending a layer 3 message indicating that the uplink access is for the paging response.

10. The method of claim 1, wherein the short message indication is 4 bits added into a NOTIFICATION message on FACCH indicating that the paging message is for a short message service.

11. A method for sending a short message, comprising:
receiving (S1), by a Mobile Switching Centre, MSC, a short message;
the method **characterized by** comprising:
sending (S2), by the MSC, to a group call service subscriber in a group call a paging message including a short message indication indicating that a short message is to be received over a Fast Associated Control Channel, FACCH; and
sending (S3), by the MSC, the short message to the group call service subscriber after the group call service subscriber receives the short message indication.

12. The method of claim 11, wherein the process of sending the short message comprises:
sending the short message at the time of UPLINK FREE in a group call.

13. A system for transmitting a short message, **characterized by** comprising:
a Mobile Switching Center, MSC, adapted to send a paging message including a short message indication in response to receiving a short message, wherein the short message indication indicates that a short message is to be received, over a Fast Associated Control Channel, FACCH; and
a Mobile Station, MS, being in a group call adapted to receive the paging message, and adapted to receive the short message according to the short message indication in the paging message.

14. The system of claim 13, wherein the MSC comprises:
a paging message transmission unit, adapted to send the paging message over the Fast Associated Control Channel, FACCH; and
a short message indication unit, adapted to add the short message indication into the paging message.

15. The system of claim 13 or 14, wherein the MS comprises:
an identification unit of short message indication, adapted to receive the paging message and adapted to identify the short message indication; and
a short message reception unit, adapted to receive the short message in response to sending the paging response.

16. A Mobile Switching Center, MSC, comprising:
a short message indication unit, adapted to add a short message indication into a paging message, wherein the short message indication indicates that a short message is to be received; and
a paging message transmission unit, adapted to send the paging message to a group call service subscriber in a group call over a Fast Associated Control Channel, FACCH.

17. A Mobile Station, MS, the MS being in a group call and **characterized by** comprising:
an identification unit of short message indication, adapted to receive a paging message including a short message indication and adapted to identify the short message indication, wherein the paging message is sent by a Mobile Switching Centre, MSC over a Fast Associated Control Channel, FACCH, and the short message indication indicates that a short message is to be received;
a short message reception unit, adapted to receive the short message in response to sending the paging response.

18. The MS of claim 17, further comprising:
a channel request transmission unit, adapted to initiate a channel request over a random channel after a group call service subscriber actively leaves the group call;
a paging response transmission unit, adapted to send a paging response of the short message according to the short message indication identified by the identification unit of short message indication.

19. The MS of claim 18, further comprising:
a group call state determination unit, adapted to determine a state of the group call in response to receiving the short message when the group call service subscriber actively leaves the group call;
and
adapted to rejoin the group call if the group call keeps ongoing.

## Patentansprüche

1. Verfahren zum Empfangen einer Kurznachricht, **dadurch gekennzeichnet, dass** es Folgendes umfasst:
Empfangen (S3), durch einen Crruppenrufdienstteilnehmer in einem Gruppenruf, einer Paging-Nachricht, die eine Kurznachrichtanzeige enthält, die anzeigt, dass eine Kurznachricht empfangen werden soll, wobei die Paging-Nachricht von einem Mobile Switching Centre MSC über einen Fast Associated Control Channel FACCH gesendet wird; und
Empfangen (S3) der Kurznachricht gemäß der Kurznachrichtanzeige in der Paging-Nachricht.

2. Verfahren nach Anspruch 1, weiterhin umfassend:
Verlassen eines Gruppenrufs als Reaktion auf das Empfangen der die Kurznachrichtanzeige enthaltenden Paging-Nachricht; wobei der Gruppenrufdienstteilnehmer die Kurznachricht gemäß der Kurznachrichtanzeige als Reaktion auf das Verlassen des Gruppenrufs empfängt.

3. Verfahren nach Anspruch 2, wobei der Prozess des Verlassens eines Gruppenrufs Folgendes umfasst:
aktives Verlassen des Gruppenrufs; oder
Verlassen des Gruppenrufs, wenn der Gruppenruf beendet wird.

4. Verfahren nach Anspruch 2, weiterhin umfassend:
Senden einer Kanalanforderung über einen Zufallskanal; und
Senden einer Paging-Antwort der Kurznachricht über einen Standalone Dedicated Control Channel SDCCH, wobei der SDCCH dem Gruppenrufdienstteilnehmer gemäß der Kanalanforderung zugeordnet ist; und
der Gruppenrufdienstteilnehmer empfängt die Kurznachricht über den SDCCH.

5. Verfahren nach Anspruch 3 oder 4, weiterhin umfassend:
falls der Gruppenrufdienstteilnehmer aktiv den Gruppenruf verlässt, Wiederbeitreten zu dem Gruppenruf, falls der Gruppenruf weiter anhält, nachdem der Gruppenrufdienstteilnehmer die Kurznachricht empfängt.

6. Verfahren nach Anspruch 1, wobei der Prozess des Empfangens der Kurznachricht Folgendes umfasst:
Empfangen der Kurznachricht zum Zeitpunkt von UPLINK FREE in dem Gruppenrufs

7. Verfahren nach Anspruch 6, wobei der Prozess des Empfangens der Kurznachricht zum Zeitpunkt von UPLINK FREE in dem Gruppenruf Folgendes umfasst:
Senden, durch den Gruppenrufdienstteilnehmer, einer Paging-Antwort über einen Fast Associated Control Channel FACCH eines Gruppenrufaufwärtskanals; und
Empfangen der durch den MSC gesendeten Kurznachricht über einen Slow Associated Control Channel SACCH eines Gruppenrufäbwärtskanals.

8. Verfahren nach Anspruch 6, wobei der Prozess des Empfangens der Kurznachricht zum Zeitpunkt von UPLINK FREE in dem Gruppenruf Folgendes umfasst:
Senden, durch den Gruppenrufdienstteilnehmer, einer Paging-Antwort über einen Gruppenrufaufwärtskanal; und
Empfangen der durch den MSC gesendeten Kurznachricht über einen Standalone Dedicated Control Channel SDCCH.

9. Verfahren nach Anspruch 8, wobei der Prozess des Sendens einer Paging-Antwort über einen Gruppenrufaufwärtskanal Folgendes umfasst:
Initiieren eines Aufwärtszugangs und Senden einer Layer-3-Nachricht, die anzeigt, dass der Aufwärtszugang für die Paging-Antwort ist.

10. Verfahren nach Anspruch 1, wobei die Kurznachrichtanzeige 4 Bits ist, die in eine NOTIFICATION-Nachricht auf FACCH hinzugefügt ist, was anzeigt, dass die Paging-Nachricht für einen Kurznachrichtendienst ist.

11. Verfahren zum Senden einer Kurznachricht, umfassend:
Empfangen (S1) einer Kurznachricht durch ein Mobile Switching Centre MSC;
wobei das Verfahren **dadurch gekennzeichnet ist, dass** es Folgendes umfasst:
Senden (S2), durch das MSC, einer Paging-Nachricht, die eine Kurznachrichtanzeige enthält, die anzeigt, dass eine Kurznachricht über den Fast Associated Control Channel FACCH empfangen werden soll, an einen Gruppenrufdienstteilnehmer in einem Gruppenruf; und
Senden (S3), durch das MSC, der Kurznachricht an den Gruppenrufdienstteilnehmer, nachdem der Gruppenrufdienstteilnehmer die Kurznachrichtanzeige empfangen hat.

12. Verfahren nach Anspruch 11, wobei der Prozess des Sendens der Kurznachricht Folgendes umfasst:
Senden der Kurznachricht zum Zeitpunkt von UPLINK FREE in einem Gruppenruf

13. System zum Übertragen einer Kurznachricht, **dadurch gekennzeichnet, dass** es Folgendes umfasst:
ein Mobile Switching Centre MSC, das dafür ausgelegt ist, eine Paging-Nachricht zu senden, die eine Kurznachrichtanzeige enthält, als Reaktion auf das Empfangen einer Kurznachricht, wobei die Kurznachrichtanzeige anzeigt, dass eine Kurznachricht über einen Fast Associated Control Channel FACCH empfangen werden soll; und
eine Mobile Station MS, die sich in einem Gruppenruf befindet, die dafür ausgelegt ist, die Paging-Nachricht zu empfangen, und dafür ausgelegt ist, die Kurznachricht gemäß der Kurznachrichtanzeige in der Paging-Nachricht zu empfangen.

14. Verfahren nach Anspruch 13, wobei das MSC Folgendes umfasst:
eine Paging-Nachricht-Übertragungseinheit, die dafür ausgelegt ist, die Paging-Nachricht über den Fast Associated Control Channel FACCH zu senden; und
eine Kurznachrichtanzeigeeinheit, die dafür ausgelegt ist, die Kurznachrichtanzeige in die Paging-Nachricht einzufiigen.

15. System nach Anspruch 13 oder 14, wobei die MS Folgendes umfasst:
eine Identifikationseinheit zur Kurznachrichtanzeige, die dafür ausgelegt ist, die Paging-Nachricht zu empfangen, und die dafür ausgelegt ist, die Kurznachrichtanzeige zu identifizieren; und
eine Kurznachrichtempfangseinheit, die dafür ausgelegt ist, die Kurznachricht als Reaktion auf das Senden der Paging-Antwort zu empfangen.

16. Mobile Switching Centre MSC, das Folgendes umfasst:
eine Kurznachrichtanzeigeeinheit, die dafür ausgelegt ist, eine Kurznachrichtanzeige in eine Paging-Nachricht einzufiigen, wobei die Kurznachrichtanzeige anzeigt, dass eine Kurznachricht empfangen werden soll; und
eine Paging-Nachricht-Übertragungseinheit, die dafür ausgelegt ist, die Paging-Nachricht an einen Gruppenrufdienstteilnehmer in einem Gruppenruf über einen Fast Associated Control Channel FACCH zu senden.

17. Mobile Station MS, wobei die MS in einem Gruppenruf ist und **dadurch gekennzeichnet ist, dass** sie Folgendes umfasst:
eine Identifikationseinheit zur Kurznachrichtanzeige, die dafür ausgelegt ist, eine Paging-Nachricht zu empfangen, die eine Kurznachrichtanzeige enthält, und dafür ausgelegt ist, die Kurznachrichtanzeige zu identifizieren, wobei die Paging-Nachricht von einem Mobile Switching Centre MSC über einen Fast Associated Control Channel FACCH gesendet wird, und die Kurznachrichtanzeige anzeigt, dass eine Kurznachricht empfangen werden soll;
eine Kurznachrichtempfangseinheit, die dafür ausgelegt ist, die Kurznachricht als Reaktion auf das Senden der Paging-Antwort zu empfangen.

18. MS nach Anspruch 17, weiterhin umfassend:
eine Kanalanforderungsübertragungseinheit, die dafür ausgelegt ist, eine Kanalanforderung über einen Zufallskanal zu initiieren, nachdem ein Gruppenrufdienstteilnehmer aktiv den Gruppenruf verlässt;
eine Paging-Antwort-Übertragungseinheit, die dafür ausgelegt ist, eine Paging-Antwort der Kurznachricht gemäß der durch die Identifikationseinheit der Kurznachrichtanzeige identifizierten Kurznachrichtanzeige zu senden.

19. MS nach Anspruch 18, weiterhin umfassend:
eine Gruppenrufzustandsbestimmungseinheit, die dafür ausgelegt ist, einen Zustand des Gruppenrufs als Reaktion auf das Empfangen der Kurznachricht zu bestimmen,
wenn der Gruppenrufdienstteilnehmer aktiv den Gruppenruf verlässt; und
dafür ausgelegt ist, dem Gruppenruf wiederbeizutreten, wenn der Gruppenruf weiter anhält.

## Revendications

1. Procédé de réception d'un message court, **caractérisé en ce qu'**il comprend :
la réception (S3), par un abonné à un service d'appel de groupe participant à un appel de groupe, d'un message d'avertissement comportant une indication de message court indiquant qu'un message court va être reçu, le message d'avertissement étant envoyé par un Centre de Commutation de Services mobiles, MSC, sur un Canal de Commande associé rapide, FACCH ; et
la réception (S3) du message court conformément à l'indication de message court dans le message d'avertissement.

2. Procédé selon la revendication 1, comprenant en outre :
la sortie d'un appel de groupe suite à la réception du message d'avertissement comportant l'indication de message court ; l'abonné au service d'appel de groupe recevant le message court conformément à l'indication de message court en réponse à la sortie de l'appel de groupe.

3. Procédé selon la revendication 2, dans lequel le processus de sortie d'un appel de groupe comprend :
la sortie active de l'appel de groupe ; ou
la sortie de l'appel de groupe quand l'appel de groupe est terminé.

4. Procédé selon la revendication 2, comprenant en outre :
l'envoi d'une requête de canal sur un canal aléatoire ; et
l'envoi d'une réponse d'avertissement du message court sur un Canal de Commande dédié autonome, SDCCH ; le SDCCH étant assigné à l'abonné au service d'appel de groupe conformément à la requête de canal ; et
l'abonné au service d'appel de groupe reçoit le message court sur le SDCCH.

5. Procédé selon la revendication 3 ou 4, comprenant en outre :
si l'abonné au service d'appel de groupe quitte activement l'appel de groupe, la reconnexion à l'appel de groupe si l'appel de groupe continue après que l'abonné au service d'appel de groupe reçoit le message court.

6. Procédé selon la revendication 1, dans lequel le processus de réception du message court comprend :
la réception du message court au moment de LIAISON MONTANTE LIBRE dans l'appel de groupe.

7. Procédé selon la revendication 6, dans lequel le processus de réception du message court au moment de LIAISON MONTANTE LIBRE dans l'appel de groupe comprend
l'envoi, par l'abonné au service d'appel de groupe, d'une réponse d'avertissement sur un Canal de Commande associé rapide, FACCH, d'un canal de liaison montante d'appel de groupe ; et
la réception du message court envoyé par le MSC sur un Canal de Commande associé lent, SACCH, d'un canal de liaison descendante d'appel de groupe.

8. Procédé selon la revendication 6, dans lequel le processus de réception du message court au moment de LIAISON MONTANTE LIBRE dans l'appel de groupe comprend
l'envoi, par l'abonné au service d'appel de groupe, d'une réponse d'avertissement sur un canal de liaison montante d'appel de groupe ; et
la réception du message court envoyé par le MSC sur un Canal de Commande dédié autonome, SDCCH.

9. Procédé selon la revendication 8, dans lequel le processus d'envoi d'une réponse d'avertissement sur un canal de liaison montante d'appel de groupe comprend :
le lancement d'un accès de liaison montante et l'envoi d'un message de couche 3 indiquant que l'accès de liaison montante est destiné à la réponse d'avertissement.

10. Procédé selon la revendication 1, dans lequel l'indication de message court est composée de 4 bits ajoutés à un message NOTIFICATION sur le FACCH indiquant que le message d'avertissement concerne un service de message court.

11. Procédé d'envoi d'un message court, comprenant :
la réception (S1), par un Centre de Commutation de Services mobiles, MSC, d'un message court ;
le procédé étant **caractérisé en ce qu'**il comprend :
l'envoi (S2), par le MSC, à un abonné à un service d'appel de groupe participant à un appel de groupe, d'un message d'avertissement comportant une indication de message court indiquant qu'un message court va être reçu sur un Canal de Commande associé rapide, FACCH ; et
l'envoi (S3), par le MSC, du message court à l'abonné au service d'appel de groupe après que l'abonné au service d'appel de groupe reçoit l'indication de message court.

12. Procédé selon la revendication 11, dans lequel le processus d'envoi du message court comprend :
l'envoi du message court au moment de LIAISON MONTANTE LIBRE dans un appel de groupe.

13. Système de transmission d'un message court, **caractérisé en ce qu'**il comprend :
un Centre de Commutation de Services mobiles, MSC, adapté pour envoyer un message d'avertissement comportant une indication de message court en réponse à la réception d'un message court, l'indication de message court indiquant qu'un message court va être reçu, sur un Canal de Commande associé rapide, FACCH ; et
une Station mobile, MS, se trouvant dans un appel de groupe adaptée pour recevoir le message d'avertissement, et adaptée pour recevoir le message court conformément à l'indication de message court dans le message d'avertissement.

14. Système selon la revendication 13, dans lequel le MSC comprend :
un module de transmission de message d'avertissement, adapté pour envoyer le message d'avertissement sur le Canal de Commande associé rapide, FACCH ; et
un module d'indication de message court, adapté pour ajouter l'indication de message court au message d'avertissement.

15. Système selon la revendication 13 ou 14, dans lequel la MS comprend :
un module d'identification d'indication de message court, adapté pour recevoir le message d'avertissement et adapté pour identifier l'indication de message court ; et
un module de réception de message court, adapté pour recevoir le message court en réponse à l'envoi de la réponse d'avertissement.

16. Centre de Commutation de Services mobiles, MSC, comprenant :
un module d'indication de message court, adapté pour ajouter une indication de message court à un message d'avertissement, l'indication de message court indiquant qu'un message court va être reçu ; et
un module de transmission de message d'avertissement, adapté pour envoyer le message d'avertissement à un abonné à un service d'appel de groupe dans un appel de groupe sur un Canal de Commande associé rapide, FACCH.

17. Station mobile, MS, la MS se trouvant dans un appel de groupe et étant **caractérisée en ce qu'**elle comprend :
un module d'identification d'une indication de message court, adapté pour recevoir un message d'avertissement comportant une indication de message court et adapté pour identifier l'indication de message court, le message d'avertissement étant envoyé par un Centre de Commutation de Services mobiles, MSC sur un Canal de Commande associé rapide, FACCH, et l'indication de message court indiquant qu'un message court va être reçu ;
un module de réception de message court, adapté pour recevoir le message court en réponse à l'envoi de la réponse d'avertissement.

18. MS selon la revendication 17, comprenant en outre :
un module de transmission de requête de canal, adapté pour lancer une requête de canal sur un canal aléatoire après qu'un abonné au service d'appel de groupe quitte activement l'appel de groupe ;
un module de transmission de réponse d'avertissement, adapté pour envoyer une réponse d'avertissement du message court en fonction de l'indication de message court identifiée par le module d'identification de l'indication de message court.

19. MS selon la revendication 18, comprenant en outre :
un module de détermination d'état d'appel de groupe, adapté pour déterminer un état de l'appel de groupe en réponse à la réception du message court quand l'abonné au service d'appel de groupe quitte activement l'appel de groupe ;
et adapté pour réintégrer l'appel de groupe si l'appel de groupe continue.
